# EUROPEAN PATENT APPLICATION

(11) **EP 2 685 224 A1**
(43) Date of publication of application: **15.01.2014**
(21) Application number: 13171781.1
(22) Date of filing: 13.06.2013
(51) Int. Cl.: G01F 1/684, G01F 15/00, G01F 15/18

(54) **Flow sensor**

(30) Priority: 09.07.2012 JP 2012153609
(71) Applicant: Azbil Corporation, Chiyoda-ku Tokyo 100-6419 (JP)
(72) Inventor: Ike, Shinichi, TOKYO 100-6419 (JP)
(74) Representative: Tischner, Oliver

(57) **Abstract**

Provided is a flow sensor including: a flow channel body in which a flow channel is formed, and an insertion hole that is communicated with the flow channel is formed from an outer surface; a base made of glass and inserted in the insertion hole of the flow channel body; an elastic gasket disposed between the insertion hole and the base; a substrate made of glass and disposed on an upper surface of the base; a flow velocity detection unit including an electrical resistance element, the flow velocity detection unit being disposed on an upper surface of the substrate and positioned in the flow channel; and an electrode that penetrates the substrate and is electrically connected to the electrical resistance element.

## Description

### Background

The present invention relates to a measurement technology, and particularly, relates to a flow sensor.

In an industrial furnace, a boiler, an air-conditioning heat source apparatus, or the like, it is demanded to supply a fluid such as a gas and a liquid at an appropriate flow rate. Therefore, various flow sensors for accurately measuring a flow rate have been developed. A flow sensor is used to measure a flow rate of a corrosive gas such as a sulfur oxide (SO_{X}), a nitrogen oxide (NO_{X}), a chlorine molecule (Cl₂), and a boron trichloride (BCl₃) in some cases. In view of this, such a technique that a substrate of a chip of a flow sensor is made of glass having corrosive resistance, and an electrode for taking out an electrical signal from the chip is provided on a back surface of the substrate has been proposed (see, for example, Japanese Patent Application Laid-open No. 2011-185869).

### Summary

It is demanded to further improve the corrosive resistance of the flow sensor. In view of this, it is an object of the present invention to provide a flow sensor having corrosive resistance.

According to an embodiment of the present invention, there is provided a flow sensor including: (a) a flow channel body in which a flow channel is formed, and an insertion hole that is communicated with the flow channel is formed from an outer surface; (b) a base made of glass and inserted in the insertion hole of the flow channel body; (c) an elastic gasket disposed between the insertion hole and the base; (d) a substrate made of glass and disposed on an upper surface of the base; (e) a flow velocity detection unit including an electrical resistance element, the flow velocity detection unit being disposed on an upper surface of the substrate and positioned in the flow channel; and (f) an electrode that penetrates the substrate and is electrically connected to the electrical resistance element.

According to the present invention, it is possible to provide the flow sensor having the corrosive resistance. Further advantages, features, aspects and details are evident from the dependent claims, the description and the drawings.

### Brief Description of Drawings

Some of the above mentioned aspects will be described in more detail in the following description of typical embodiments with reference to the following drawings in which:
Fig. 1 is a cross-sectional view showing a flow sensor according to a first embodiment of the present invention;
Fig. 2 is a cross-sectional view showing a flow channel body in which a base of the flow sensor is not inserted according to the first embodiment of the present invention;
Fig. 3 is a cross-sectional view showing an elastic gasket and the flow channel body in which the base of the flow sensor is not inserted according to the first embodiment of the present invention;
Fig. 4 is a perspective view showing a chip and the base of the flow sensor according to the first embodiment of the present invention;
Fig. 5 is a cross-sectional view showing the chip and the base of the flow sensor taken along the line V-V of Fig. 4 according to the first embodiment of the present invention;
Fig. 6 is a cross-sectional view showing a flow sensor according to a comparative example of the first embodiment of the present invention;
Fig. 7 is a cross-sectional view showing a flow sensor according to a second embodiment of the present invention;
Fig. 8 is a cross-sectional view showing a flow channel body in which a base of the flow sensor is not inserted according to the second embodiment of the present invention;
Fig. 9 is a cross-sectional view showing an elastic gasket and the flow channel body in which the base of the flow sensor is not inserted according to the second embodiment of the present invention; and
Fig. 10 is a cross-sectional view showing the elastic gasket, a gasket press member, and the flow channel body in which the base of the flow sensor is not inserted according to the second embodiment of the present invention.

### Detailed Description of Embodiments

Hereinafter, embodiments of the present invention will be described with reference to the drawings. In the drawings, the same or similar parts are denoted by the same or similar reference symbols. Note that the drawings are schematic drawings. Specific dimensions and the like are to be determined with reference to the following description. As a matter of course, dimensional relation between one figure and another figure may be different, and a dimensional ratio between one figure and another figure may be different.

### (First embodiment)

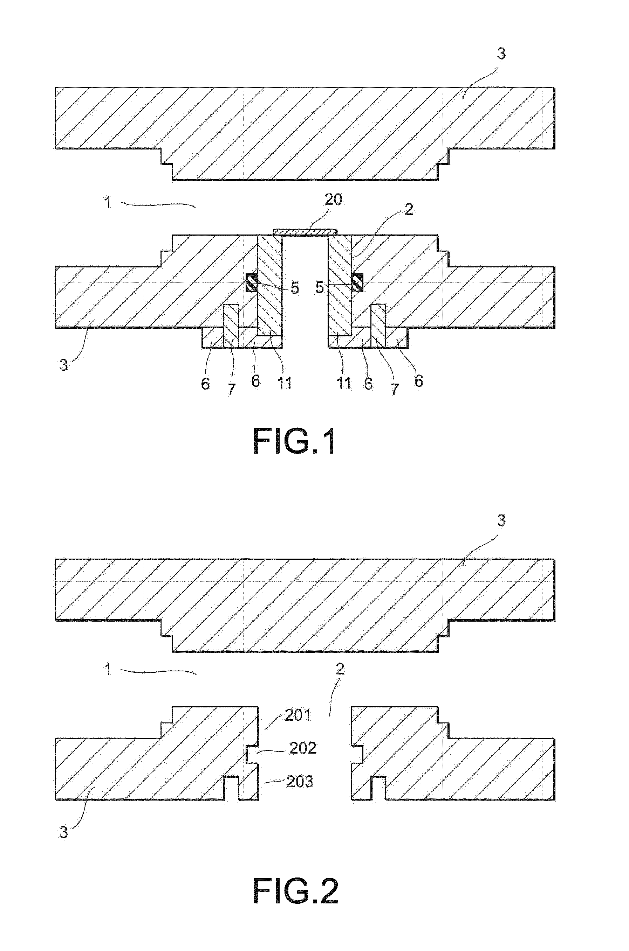

As shown in Fig. 1, a flow sensor according to a first embodiment includes a flow channel 1, a flow channel body 3, a base 11, an elastic gasket 5, and a chip 20. In the flow channel 1, a fluid such as a gas and a liquid flows. In the flow channel body 3, an insertion hole 2 shown in Fig. 2, which is communicated with the flow channel 1, is formed from an outer surface. The base 11 shown in Fig. 1 is made of glass and inserted in the insertion hole 2 of the flow channel body 3. The elastic gasket 5 is disposed between the insertion hole 2 and the base 11 and secures the base 11. The chip 20 is disposed on an upper surface of the base 11 and positioned in the flow channel 1.

As shown in Fig. 2, the insertion hole 2 of the flow channel body 3 has a first part 201 which is continuous with the flow channel 1 and has an inner circumference which is approximately the same as an outer circumference of the base 11 shown in Fig. 1, a second part 202 which is continuous with the first part 201 and has an inner circumference larger than the inner circumference of the first part 201, and a third part 203 which is continuous with the second part 202 and has an inner circumference which is approximately the same as the inner circumference of the first part 201. Accordingly, in the flow channel body 3, the second part 202 of the insertion hole 2 is depressed with respect to the first part 201 and the third part 203, thereby forming a groove. The cross-sectional shape of the first part 201, the second part 202, and the third part 203 of the insertion hole 2 is a circle, for example.

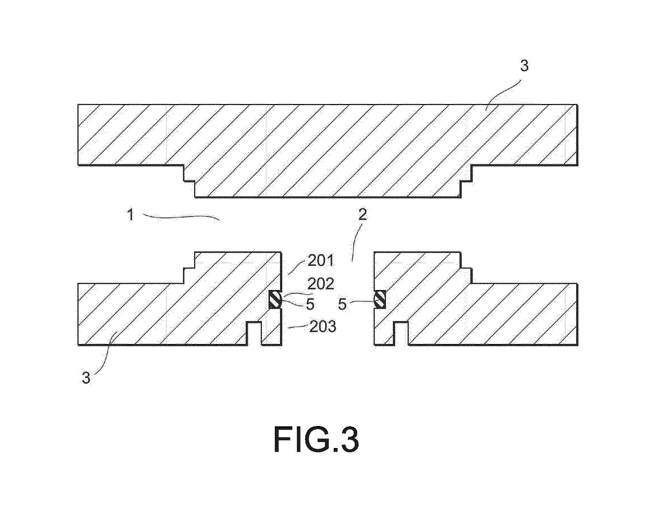

The elastic gasket 5 shown in Fig. 1 is made of an elastic body having corrosive resistance, for example. As the elastic gasket 5, an O-ring can be used, for example. As shown in Fig. 3, the elastic gasket 5 is fitted to the second part 202 of the insertion hole 2. An outer circumference of the elastic gasket 5 in the state in which the elastic gasket 5 is not disposed in the insertion hole 2 is larger than the inner circumference of the second part 202 of the insertion hole 2 so as to obtain sufficient airtightness in the state in which the elastic gasket 5 is disposed in the insertion hole 2, for example. Further, an inner circumference of the elastic gasket 5 is smaller than the outer circumference of the base 11 shown in Fig. 1. Furthermore, a thickness of the elastic gasket 5 is larger than a width of the second part 202 in a depth direction of the insertion hole 2.

If the base 11 is inserted in the insertion hole 2, the elastic gasket 5 is sandwiched between a side wall of the base 11 and an inner wall of the second part 202 of the insertion hole 2, with the result that the elastic gasket 5 is pressed in a normal direction of the side wall of the base 11 and thus deformed. The elastic gasket 5 deformed is cohered to the side wall of the base 11 and gives pressure to the side wall of the base 11 in a vertical direction. Further, the elastic gasket 5 is also cohered to the inner wall of the second part 202 of the insertion hole 2 and gives pressure to the inner wall of the second part 202 in the vertical direction. As a result, the elastic gasket 5 prevents a fluid that flows in the flow channel 1 from passing between the inner wall of the insertion hole 2 of the flow channel body 3 and the side wall of the base 11 and leaking to the outside of the flow channel body 3.

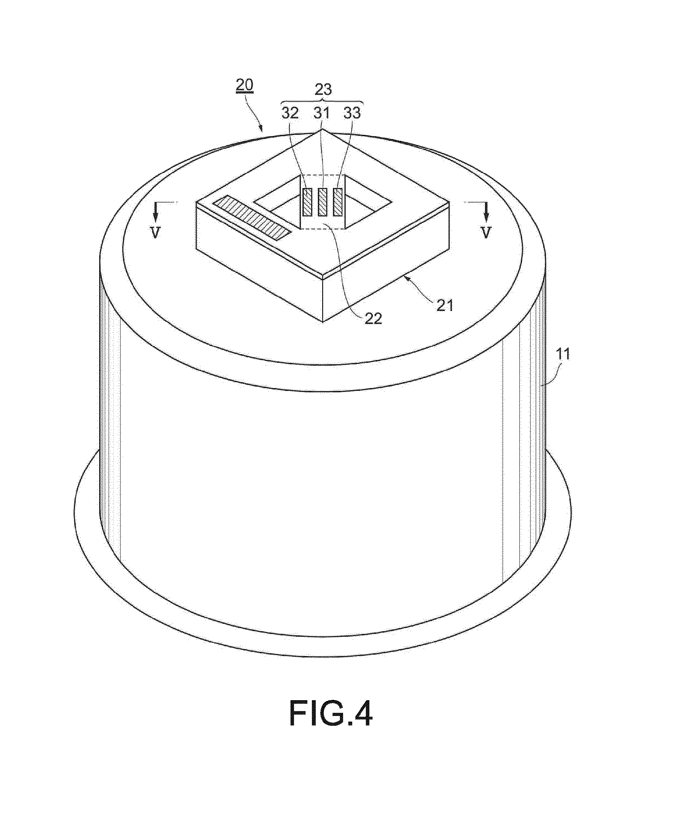

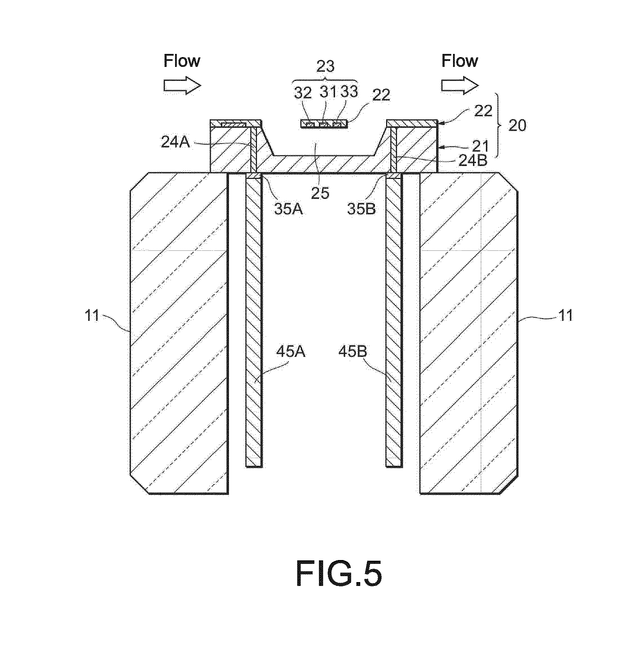

As shown in Fig. 4, which is a perspective view, and Fig. 5, which is a cross-sectional view taken along the line V-V of Fig. 4, the chip 20 disposed on an upper surface of the base 11 includes a substrate 21 made of glass, a flow velocity detection unit 22 which includes an electrical resistance element 23 and is disposed in the flow channel 1, and electrodes 24A and 24B which penetrate the substrate 21 and are electrically connected to the electrical resistance element 23.

On the substrate 21 disposed on the upper surface of the base 11, a cavity 25 is formed. The cavity 25 is formed by an etching method, a sandblasting method, or the like. The substrate 21 can be made of quartz glass or borosilicate glass such as Tempax (registered trademark), for example. In the flow velocity detection unit 22, the electrical resistance element 23 is included in an insulating film or the like. The insulating film can be made of a silicon oxide (SiO₂) or the like. The flow velocity detection unit 22 is disposed so as to cover the cavity 25 of the substrate 21. Further, on both ends of the flow velocity detection unit 22, openings of the cavity 25 are formed.

In the flow velocity detection unit 22, the electrical resistance element 23 provided in the insulating film having corrosive resistance includes a first temperature detection element 32, a heat generation element 31, and a second temperature detection element 33. The heat generation element 31 generates heat by supplying electric power thereto and heats a fluid that flows on the surface of the flow velocity detection unit 22. The first temperature detection element 32 and the second temperature detection element 33 each outputs an electrical signal depending on the temperature of the fluid that flows on the surface of the flow velocity detection unit 22. The first temperature detection element 32 is used to detect the temperature of the fluid on an upstream side of the heat generation element 31, for example, and the second temperature detection element 33 is used to detect the temperature of the fluid on a downstream side of the heat generation element 31, for example. The heat generation element 31, the first temperature detection element 32, and the second temperature detection element 33 each can be made of a conductive material such as platinum (Pt).

The electrodes 24A and 24B shown in Fig. 5 are electrically connected to at least one of the first temperature detection element 32, the heat generation element 31, and the second temperature detection element 33 via a circuit provided in the flow velocity detection unit 22. It should be noted that the number of electrodes that penetrate the substrate 21 is not limited to two, although the two electrodes 24A and 24B that penetrate the substrate 21 are shown in Fig. 2. On a back surface of the substrate 21, a conducting pad 35A electrically connected to the electrode 24A and a conducting pad 35B electrically connected to the electrode 24B are disposed. The electrodes 24A and 24B can be made of copper (Cu), a copper alloy, or the like. The electrodes 24A and 24B each can be formed by forming a hole in the substrate 21 by the etching method or a microfabrication method with the use of a drill and filling the hole with conducting matters. The conducting pads 35A and 35B can be made of gold (Au) or the like.

The tubular base 11 can be made of quartz glass or borosilicate glass such as Tempax (registered trademark). The chip 20 is disposed on the upper surface of the base 11. The base 11 and the substrate 21 of the chip 20 are made of glass, so it is possible to bond the upper surface of the base 11 and the back surface of the substrate 21 to each other with a corrosive-resistant adhesive. As the adhesive, a fluororesin-based adhesive can be used. Alternatively, the upper surface of the base 11 and the back surface of the substrate 21 may be bonded to each other by a dilute hydrofluoric acid (HF) bonding method, a room temperature activation bonding method, or a diffusion bonding method.

If the base 11 and the substrate 21 are made of the same glass, a coefficient of thermal expansion of the base 11 is the same as a coefficient of thermal expansion of the substrate 21. Therefore, distortion which can be generated on an interface between materials having different coefficients of thermal expansion is difficult to be generated in the flow sensor according to the embodiment.

In the tubular base 11, conducting members 45A and 45B for taking electrical signals to the outside from the electrodes 24A and 24B on the back surface of the chip 20 are disposed. The electrodes 24A and 24B are electrically connected to the conducting members 45A and 45B, respectively. Lead pins or the like can be used as the conducting members 45A and 45B.

The base 11 is fixed to the flow channel body 3 with a plate-like member 6 shown in Fig. 1. The plate-like member 6 is made of metal or the like. Because the elastic gasket 5 prevents the fluid that flows in the flow channel 1 from reaching the plate-like member 6, the plate-like member 6 may not necessarily be made of a corrosive-resistant material. The plate-like member 6 is fixed to the flow channel body 3 with a bolt 7.

Here, with reference to Figs. 1 and 4, in the case where the fluid in contact with the surface of the flow velocity detection unit 22 remains still, the heat applied to the fluid by the heat generation element 31 is transmitted in the upstream direction and the downstream direction of the flow channel 1 symmetrically. Thus, the temperature of the first temperature detection element 32 is the same as the temperature of the second temperature detection element 33, and the electric resistance of the first temperature detection element 32 is the same as the electric resistance of the second temperature detection element 33. In contrast, in the case where the fluid flows from the side on which the first temperature detection element 32 is disposed toward the side on which the second temperature detection element 33 is disposed, the heat applied to the fluid by the heat generation element 31 is transmitted to the side on which the second temperature detection element 33 is disposed. Therefore, the temperature of the second temperature detection element 33 is higher than the temperature of the first temperature detection element 32. As a result, a difference is caused between the electric resistance of the first temperature detection element 32 and the electric resistance of the second temperature detection element 33. The difference between the electric resistance of the second temperature detection element 33 and the electric resistance of the first temperature detection element 32 are correlated with the flow velocity of the fluid in contact with the surface of the flow velocity detection unit 22. Therefore, from the difference between the electric resistance of the second temperature detection element 33 and the electric resistance of the first temperature detection element 32, the flow rate of the fluid that flows in the flow channel 1 is obtained.

In a flow sensor in related art, a base is made of corrosive-resistant metal such as Hastelloy (registered trademark) and Inconel (registered trademark). However, the corrosive-resistant metal does not have resistance to a corrosive liquid such as highly concentrated hydrochloric acid, sulfuric acid, aqua regia, and ferric chloride. Further, if the corrosive-resistant metal is used as the material of the base, it is impossible to perform anodic bonding between the base and a substrate of a chip which is made of quartz glass.

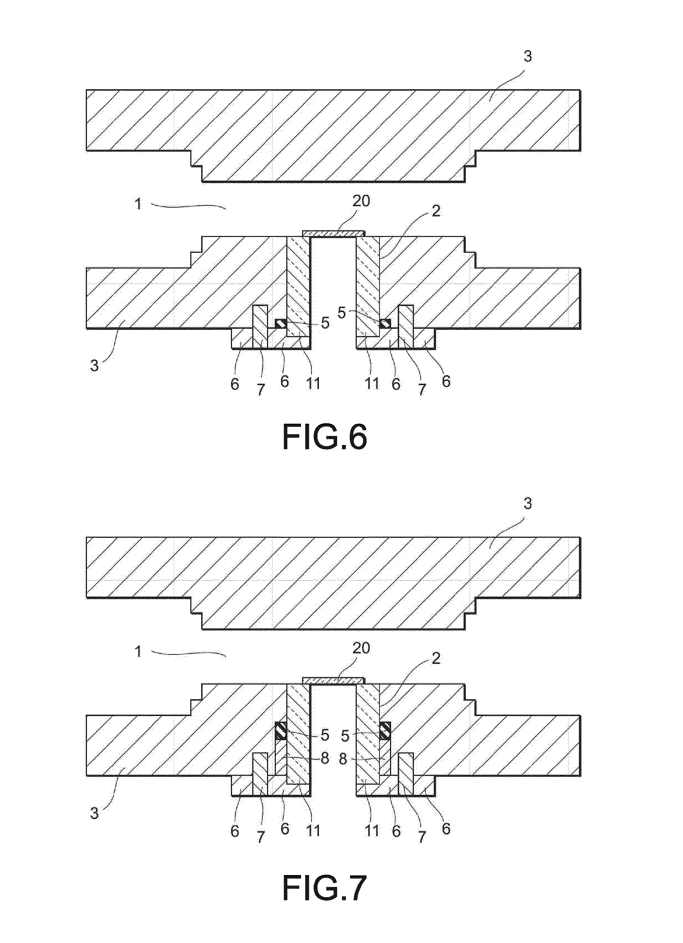

In contrast, in the flow sensor according to the first embodiment, not only the substrate 21 of the chip 20 but the base 11 is made of glass, so it is possible to measure the flow rate of the corrosive liquid such as highly concentrated hydrochloric acid, sulfuric acid, aqua regia, and ferric chloride. Further, in the flow sensor according to the first embodiment, as shown in Fig. 1, the elastic gasket 5 seals a gap between the inner wall of the insertion hole 2 of the flow channel body 3 and the side wall of the base 11. With this structure, it is possible to prevent the fluid that flows in the flow channel 1 from passing through the gap between the inner wall of the insertion hole 2 of the flow channel body 3 and the side wall of the base 11 and leaking to the outside of the flow channel body 3. It should be noted that, as shown in Fig. 6, if the elastic gasket 5 is disposed so as to be in contact with an outer surface of the flow channel body 3, the fluid that flows in the flow channel 1 may enter the vicinity of the outer surface of the flow channel body 3. The fluid that enters the vicinity of the outer surface of the flow channel body 3 can remain at the position. It may be difficult to remove the remaining fluid at the time of vacuum purge. Further, when the base 11 has to be detached from the flow channel body 3, the remaining fluid may be harmful to an operator. For those reasons, it is desirable that the part where the flow may remain is small, and as shown in Fig. 1, it is desirable to provide the second part 202 depressed at the intermediate part of the insertion hole 2 or to the chip 20 side from the intermediate part and dispose the elastic gasket 5 in the second part 202.

### (Second embodiment)

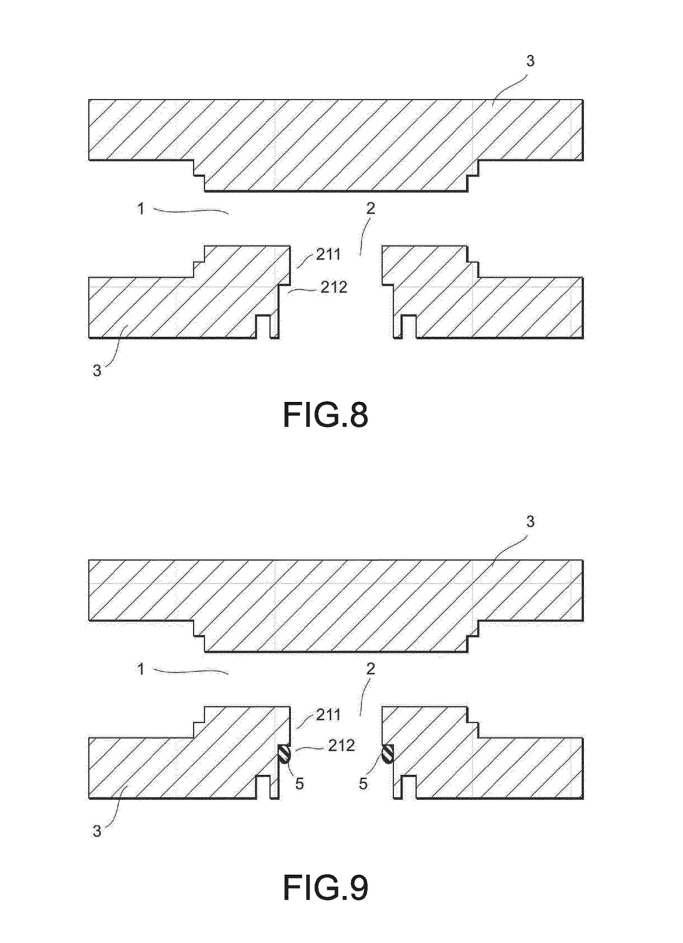

In a flow sensor according to a second embodiment, as shown in Figs. 7 and 8, the insertion hole 2 of the flow channel body 3 has a first part 211 which is continuous with the flow channel 1 and has an inner circumference which is approximately the same as an outer circumference of the base 11 and a second part 212 which is continuous with the first part 211 and has an inner circumference larger than the inner circumference of the first part 211. For example, the second part 212 of the insertion hole 2 is continuous with the outer surface of the flow channel body 3. Thus, in the insertion hole 2, a step is provided which is formed by the first part 211 and the second part 212.

As shown in Fig. 9, the elastic gasket 5 is disposed on the step formed by the first part 211 and the second part 212 in the insertion hole 2. In the second embodiment, for example, an outer circumference of the elastic gasket 5 in the state in which the elastic gasket 5 is not disposed in the insertion hole 2 is larger than an inner circumference of the second part 212 of the insertion hole 2. Further, an inner circumference of the elastic gasket 5 is smaller than the outer circumference of the base 11 shown in Fig. 7.

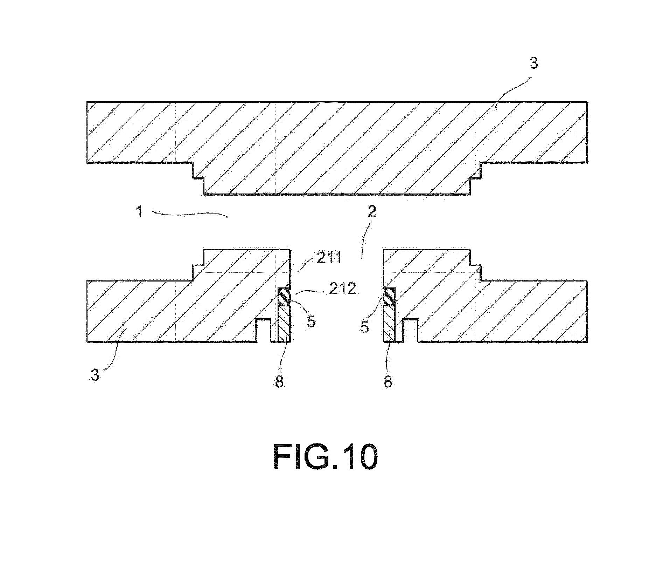

As shown in Fig. 10, the elastic gasket 5 is pressed against the step formed by the first part 211 and the second part 212 of the insertion hole 2 by a gasket press member 8. The gasket press member 8 is formed of metal, glass, or the like. The gasket press member 8 has a tubular shape, for example. An outer circumference of the gasket press member 8 is the same as the inner circumference of the second part 212. An inner circumference of the gasket press member 8 is the same as the outer circumference of the base 11 shown in Fig. 7, for example. The gasket press member 8 is inserted between the side wall of the base 11 and an inner wall of the second part 212 of the insertion hole 2.

The base 11 and the gasket press member 8 are fixed to the flow channel body 3 by the plate-like member 6. The plate-like member 6 is fixed to the flow channel body 3 with the bolt 7. It should be noted that the gasket press member 8 and the plate-like member 6 may be integrated with each other. If the pressure of the fluid that flows in the flow channel 1 is increased, movement of the elastic gasket 5 is restrained, and sealing performance of the elastic gasket 5 is maintained, because the elastic gasket 5 is fixed by the gasket press member 8. In the flow sensor according to the second embodiment, it is unnecessary to form a groove where the elastic gasket 5 is to be disposed on the side wall of the insertion hole 2. Further, it is possible to easily dispose the elastic gasket 5 in the insertion hole 2.

### (Other embodiments)

The embodiments of the present invention are described above. It should be understood that descriptions and drawings, which are part of the disclosure, do not limit the present invention. It should be understood by those skilled in the art that various modifications, embodiments, and operational technologies become apparent based on the disclosure. For example, the flow sensor according to the embodiments has the corrosive resistance but may of course be used to measure the flow rate of a fluid having no corrosiveness. In this way, it should be understood that the present invention comprises various embodiments and the like which are not described here.

The flow sensor according to the embodiments can be applied to a physical and chemical field, a medical field, a biotechnological field, a semiconductor field, and the like. The fields to which the flow sensor can be applied are not limited to those.

## Claims

1. A flow sensor, comprising:
a flow channel body (3) in which a flow channel (1) is formed, and an insertion hole (2) that is communicated with the flow channel is formed from an outer surface;
a base (11) made of glass and inserted in the insertion hole of the flow channel body;
an elastic gasket (5) disposed between the insertion hole and the base;
a substrate (21) made of glass and disposed on an upper surface of the base;
a flow velocity detection unit (22) including an electrical resistance element (23), the flow velocity detection unit being disposed on an upper surface of the substrate and positioned in the flow channel; and
an electrode (24A, 24B) that penetrates the substrate and is electrically connected to the electrical resistance element.

2. The flow sensor according to claim 1, wherein
the insertion hole (2) includes a first part which is continuous with the flow channel and has an inner circumference that is approximately the same as an outer circumference of the base and a second part which is continuous with the first part and has an inner circumference that is larger than the inner circumference of the first part, and
the elastic gasket (5) is disposed on a step formed by the first part and the second part of the insertion hole.

3. The flow sensor according to claim 2, wherein
the second part of the insertion hole is continuous with the outer surface of the flow channel body, further comprising
a gasket press member inserted between the base and a side wall of the second part of the insertion hole.

4. The flow sensor according to claim 1, wherein
the insertion hole (2) includes a first part (201) which is continuous with the flow channel and has an inner circumference that is approximately the same as an outer circumference of the base, a second part (202) which is continuous with the first part and has an inner circumference that is larger than the inner circumference of the first part, and a third part (203) which is continuous with the second part and has an inner circumference that is the same as that of the first part, and
the elastic gasket (5) is disposed at the second part of the insertion hole.

5. The flow sensor according to any one of claims 1 to 4, wherein
the elastic gasket (5) is deformed by being sandwiched between a side wall of the base and an inner wall of the insertion hole.

6. The flow sensor according to any one of claims 1 to 5, wherein
the elastic gasket (5) applies pressure to the side wall of the base in a vertical direction.

7. The flow sensor according to any one of claims 1 to 6, wherein
the elastic gasket (5) is an O-ring.

8. The flow sensor according to any one of claims 1 to 7, further comprising
a conducting member disposed in the base and electrically connected to the electrode.

9. The flow sensor according to any one of claims 1 to 8, wherein
the upper surface of the base (11) and a back surface of the substrate (21) are bonded to each other with an adhesive.

10. The flow sensor according to claim 9, wherein
the adhesive is a fluororesin-based adhesive.

11. The flow sensor according to any one of claims 1 to 8, wherein
the upper surface of the base (11) and the back surface of the substrate (21) are bonded to each other by one of dilute hydrofluoric acid bonding, room temperature activation bonding, and diffusion bonding.

12. The flow sensor according to any one of claims 1 to 11, wherein
the base (11) and the substrate (21) have the same coefficient of thermal expansion.

13. The flow sensor according to any one of claims 1 to 12, wherein
the base (11) is made of one of quartz glass and borosilicate glass.

14. The flow sensor according to any one of claims 1 to 13, wherein
the substrate (21) is made of one of quartz glass and borosilicate glass.

15. The flow sensor according to any one of claims 1 to 14, wherein
the base (11) has a tubular shape.
